# EUROPEAN PATENT SPECIFICATION

(11) **EP 3 713 457 B1**
(45) Date of publication and mention of the grant of the patent: **10.11.2021**
(21) Application number: 18829499.5
(22) Date of filing: 23.11.2018
(51) Int. Cl.: A47J 31/057, A47J 31/56, A47J 31/54

(54) **MACHINE AND METHOD FOR PREPARING BEVERAGES**
MASCHINE UND VERFAHREN ZUR HERSTELLUNG VON GETRÄNKEN
MACHINE ET PROCÉDÉ DE PRÉPARATION DE BOISSONS

(30) Priority: 23.11.2017 IT 201700134712
(43) Date of publication of application: 30.09.2020
(73) Proprietor: De' Longhi Appliances S.r.l. Con Unico Socio, 31100 Treviso (IT)
(72) Inventor: DE' LONGHI, Giuseppe, 31100 Treviso (IT); MAZZON, Renzo, 31100 Treviso (IT); VAZZOLER, Alessio, 31100 Treviso (IT); BELLESE, Alessandro, 31100 Treviso (IT)
(74) Representative: Petraz, Gilberto Luigi
(86) International application number: PCT/IT2018/050228
(87) International publication number: WO 2019/102512

(56) References cited:
- WO-A1-2008/007306
- WO-A1-2016/016857
- WO-A1-2016/034255
- WO-A1-2017/191529
- WO-A2-2014/195842
- DE-U1- 8 708 083

## Description

### FIELD OF THE INVENTION

The present invention concerns a machine, either automatic or semiautomatic, suitable for preparing beverages, advantageously hot, such as coffee, tea, various infusions, or even just water, and a method for preparing the beverage.

### BACKGROUND OF THE INVENTION

Machines that produce American-style coffee are known, that is, those long coffees also called "drip coffee", obtained by brewing a quantity of coffee powder with hot water.

The Applicant set himself the problem of improving these machines, making them suitable to provide a wide range of beverages, whether cold, or, advantageously, hot.

It is known that current machines have a tank for the water, a device for heating the water, a container suitable for positioning a filtering element for the coffee powder, or other aromatic mixture, which is passed through by the hot water, and a receptacle, for example a jug, normally suitable to contain a maximum volume sufficient to fill a certain number of cups or glasses for the end users.

The jug is normally associated with its own heating means to keep the coffee beverage dispensed in the jug hot.

The heating device is generally put in co-operation with the tank, or put downstream of the tank, for example along a pipe that connects an exit of the tank to the filtering container.

When the heating device is activated, the heated water is made to flow from the tank to the filtering container in a known manner, either by convective motion, or by means of a pumping element.

The mixture can be introduced or loaded automatically into the filtering element. Means for containing the powdered mixture, and/or metering means and automatic loading means can be present.

It is also known that such machines are generally structured and organized to provide the filtering container with the quantity of hot water useful and/or necessary, or to empty the tank.

These machines have a number of limitations and/or disadvantages.

A first disadvantage is that they dispense a fixed quantity of brewed beverage.

Another disadvantage is that they are generally structured to dispense only coffee-based infused beverages, so that they are not structured to dispense tea-based infused beverages or other plant substances.

Moreover, such machines are not able to dispense partial quantities with respect to the size of the jug and/or the tank.

Another disadvantage of known machines is that they are not suitable to dispense water alone.

To partly solve such problems, machines are known that dispense beverages of the "drip coffee" type, which provide the possibility of selecting the quantity of brewed beverage, and also the degree of infusion of the same.

For example, machines are known that provide to control the quantity of water to be dispensed by regulating the operation of the heating mean. Such solutions, however, do not allow accurate control of the quantity of water to be dispensed in relation to the selection made by the user, since convective motion is generally unreliable.

Machines are also known that provide to control the quantity of water to be dispensed by a pump. These solutions too, however, do not guarantee to dispense the specific quantity of water for each beverage preparation.

Known solutions also provide to control the intensity of the beverage dispensed by performing a pre-infusion step and regulating the quantity of water and/or the pre-infusion time on each occasion.

Providing a pre-infusion step, however, entails an increase in the time required for dispensing the infused drink, which can therefore exceed the time normally set as a requirement by the "high quality" certification parameters.

Moreover, the period of time needed for pre-infusion, during which there is a pause in the delivery of the water, entails a decrease in the heat of the water delivered which influences the qualities of taste of the brewed beverage prepared.

From WO-A-2016/034255 an apparatus and a method are known for preparing beverages, in particular espresso type coffee or "cappuccino", in which the apparatus comprises a brewing chamber, a pump for supplying water from a tank to the brewing chamber, two heating elements to heat the water, and a controller to independently activate the heating elements. This solution, while offering a certain versatility of control of the temperatures reached by the water before the infusion, does not solve the problem of thermal losses of the heated water, as well as presents limits in terms of efficiency of the cycle.

The document WO-A-2008/007306 discloses an apparatus for preparing hot beverages comprising a boiler to heat a quantity of water, a pump, and a heating element to heat the water in the boiler. When a thermostat detects that the water has reached the desired temperature, the pump is started.

WO-A-2014/195842 refers to a machine for the instantaneous preparation of a hot liquid, or steam, comprising a heating element, a temperature sensor connected to the heating element, a control unit connected to the heating element and the thermostat, and a pump.

Known solutions, moreover, are generally suitable only for the preparation of coffee beverages, and do not allow to change the temperature of the water simply and quickly to adapt it to aromatic mixtures of a different type, even for each preparation cycle of a beverage.

Furthermore, in known machines, at the end of preparation of the desired beverage, a certain quantity of residual water can remain inside the hydraulic circuit that connects the tank to the filtering element, which can entail problems of flavor and/or hygiene, if the water stays inside for more than a certain period.

In addition, the quantities of residual water of a previous preparation can distort the measurement of the water fed, which can result in a brewed beverage which has its predefined characteristics altered.

The Applicant thus set himself the purpose of extending the function and functionality of this type of machine, while at the same time improving the efficiency of the dispensing cycle and avoiding the disadvantages identified above, and others.

A first purpose of the present invention is to dispense a quantity of beverage as demanded by the user in a precise manner.

Another purpose is to dispense the beverage with the desired concentration.

It is another purpose to facilitate and simplify the use of this machine by the user.

Another purpose is to provide a machine that resets its initial state at the end of each beverage preparation, ensuring the delivery of the quantity of water desired on each occasion, to each operation in a precise manner.

Another purpose of the present invention is to provide a machine able to regulate dynamically the water temperature dispensed, according to the request.

Another purpose of the present invention is to provide a machine able to regulate the temperature of the dispensed water according to the organoleptic characteristics required in the beverage.

Still another purpose of the invention is to provide a machine which, on the one hand, allows to reduce the thermal losses, and on the other to ensure that the water is delivered on each occasion at the precise desired temperature.

Another purpose of the present invention is to optimize the efficiency of the water heating.

It is also a purpose of the present invention to provide a machine able to minimize energy consumption and to prevent the contamination of the beverages dispensed due to possible water stagnation along the pipes in which the water passes.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, embodiments described here concern a machine for preparing a beverage which allows to dispense, on each occasion, the necessary quantity of water, or also the necessary quantity of water, in relation to the beverage required by a user.

The machine according to the invention also allows to optimize, on each occasion, the temperature, or also the temperature, of the heated water according to the beverage required.

The machine according to the invention provides, in particular, that a user can choose, by means of an interface, a particular type of beverage, for example a beverage with precise organoleptic characteristics.

For example, according to some embodiments, a user can select a coffee beverage, specifying its concentration, or intensity, for example light, normal, or strong, and possibly the quantity of beverage to be dispensed, choosing the size of the container to be used, for example, a jug, cup, mug, glass, or container of different size.

The machine comprises a water tank, of a known type, which can be filled on each occasion, either periodically or continuously.

Means to indicate the volume of water are possibly present in the water tank, said means being associated with signaling means and/or means to control the water delivery into the tank.

According to a variant, instead of the tank, or in association with it, a continuous water source can be provided.

If the tank is associated with a continuous water source, it can be provided that the user can choose the preferred source of supply: tank or direct.

The tank, advantageously, is placed in fluid communication, by means of at least one circuit, with the filtering container suitable to contain the aromatic mixture.

According to some embodiments, the filtering container can be standard, that is, suitable to contain a desired quantity of aromatic mixture on each occasion.

For example, the aromatic mixture can be a powdered mixture and/or with a desired grain size, in leaves, or portions thereof, of coffee, tea, or other vegetable substance, or other.

According to another variant, the machine comprises a pump suitable to pick up the water from the tank and supply it to the filtering container.

According to another variant, the pump has an advantageously adjustable and controllable flow rate.

According to some embodiments of the invention, between the tank and the filtering container, there is an instrument suitable to control the quantity of water dispensed.

Along the water path there is also a device to heat the water in transit.

According to other embodiments, the heating device comprises a boiler.

According to some embodiments, the boiler comprises at least one transit channel associated with at least one heating element disposed at least along most of its longitudinal extension.

According to a variant, the internal wall of the transit channel is lined with a material which does not allow the sedimentation of the limescale present in the water.

The combination of the heating element and the boiler is, however, sufficient to support the increased water delivery provided at the desired temperature.

According to a variant, the heating element is active only in relation to the specific delivery.

According to another variant, the heating element is always active.

According to another variant, the heating element is always active but with different heating capacities, for example between the dispensing function and the standby function.

It is another variant to provide that the heating element is active, or can be activated, according to the base temperature set during the standby function.

According to some embodiments, the boiler has at least a substantially vertical extension in such a way as to optimize heating efficiency and reduce thermal losses to a minimum.

According to other embodiments, the boiler has an accumulation zone for the water inside it.

According to other embodiments, the boiler comprises two heating elements, autonomous and independent of each other, which can be selectively activated and/or deactivated in relation to specific requirements.

According to some embodiments, sensor means are provided to control that the dispensed water has the desired temperature.

The sensor means for temperature control can be disposed downstream of the boiler, or in relation to the terminal part thereof.

According to some embodiments, the machine according to the invention comprises a control and command unit configured to regulate the functioning thereof, subjecting one or more parts, depending on the beverage selected by the user.

According to some embodiments, the control and command unit communicates with the sensor means to regulate the functioning in such a way as to regulate the temperature of the water delivered according to the beverage selection made by the user.

According to a variant, the machine allows to modify the functioning parameters of one or more components (pump, heating device, infusion time, etc.) depending on the specific drink selected by the user by means of the interface.

The machine, according to another variant, is provided with a diffusion head configured to dispense water, at the desired temperature, in a shower, jet, or mist, in relation to the type of aromatic mixture to be infused, and to the type and quantity of beverage to be prepared, that is, depending on the user's request.

According to a variant, the machine has means suitable to define the maximum volume of the container, where it is provided to be able to use various types of containers.

According to another variant, means are provided that indicate the useful volume to the user, so that the user can indicate the degree of filling of the container, that is, the physical quantity.

In this case, the means that can be used by the user also include the possibility for the user to indicate the degree of filling of the container with the dispensed beverage.

The filtering container of the aromatic mixture suitable to create the brewed beverage, according to one variant, can have controlled dispensing means in order to obtain the degree of infusion required by the user on each occasion.

Possible heating means located under the receiving jug, according to a variant, can be subject to the characteristics of the beverages as chosen by the user.

The embodiments described here also concern a method for preparing a specific quantity of beverage with the organoleptic characteristics selected by a user.

The method according to the invention provides that when the user has selected the desired beverage, an operation to prepare the beverage is started.

At the start of the preparation, the method provides initially to activate the pump to fill the boiler with the water to be heated, reaching the temperature sensor means, and subsequently to activate the heating element until the water inside the boiler reaches a temperature consistent with the selected beverage.

In this way, the beverage is always dispensed at the desired temperature, regardless of the time interval elapsed since the previous beverage preparations.

According to some embodiments, when the temperature sensor means detect a temperature of the heated water corresponding to the specific temperature, the control and command unit starts the pump again to dispense the quantity of water corresponding to the selection made to the filtering container and to the outlet.

According to a variant, based on the selection made, the control and command unit predisposes the various operating components according to the organoleptic characteristics and/or the temperature selected by the user.

According to other embodiments, at the end of the dispensing of the beverage, the method provides to restore the initial conditions of the machine, so as to guarantee, on each occasion, for each beverage selected, both to heat the water to the correct and specific temperature, and also to provide the defined quantity thereof.

According to other embodiments, at the end of the dispensing of the beverage, the method provides to deactivate the pump, leaving the heating device active for a certain time so as to empty the circuit by means of a convective motion, and possibly to dry the water remaining inside it.

In this way, possible residual water is prevented from remaining in the circuit and distorting the measurement of the quantity of water dispensed in a subsequent beverage dispensing operation.

By drying the circuit downstream of the pump, in fact, it ensures that the water fed to the filtering element for each beverage preparation operation corresponds to that actually required by the selection made by the user, thus avoiding both the preparation of unsuitable or too diluted beverages, and also avoiding dispensing excessive quantities of liquid with respect to the container selected, and used by the user.

According to a variant, periodically, or in relation to a signal received from the control and command unit, the method can provide a function for cleaning the boiler, to eliminate any sedimentation.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view of a machine for preparing beverages, according to embodiments described here;
- fig. 2 is a detailed schematic view of a component of the beverage preparation machine in fig. 1;
- fig. 3 is a schematic view of the control system of the beverage preparation machine according to embodiments described here.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

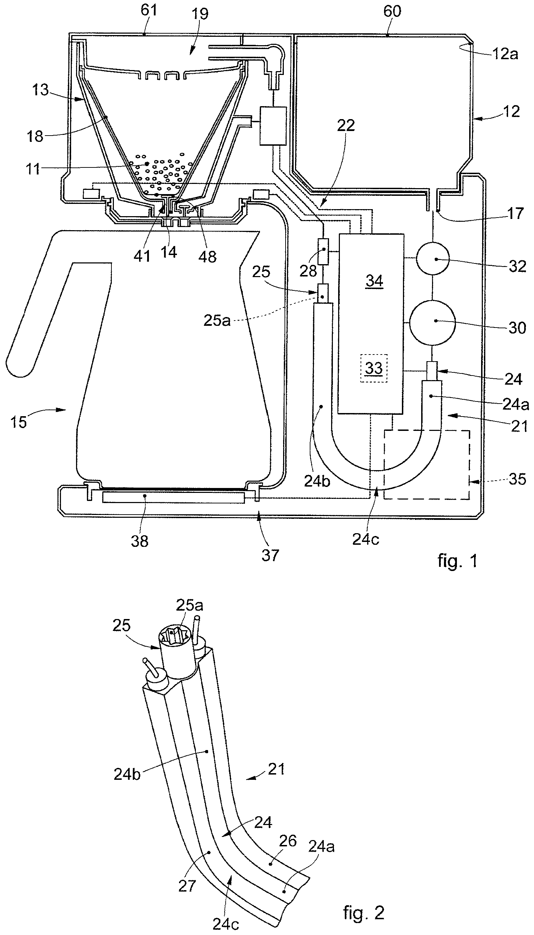

Forms of embodiment described here with reference to fig. 1 concern a machine 10 for the preparation and delivery of a hot or cold beverage, starting from an aromatic mixture 11 in powder form or ground, by brewing, infusing it or mixing it with water.

According to some embodiments, the machine 10 according to the invention allows a user to select the type and quantity of beverage to be prepared by means of a user interface 35.

According to some embodiments, the user interface 35 can comprise pressure keys, selection knobs, and/or a touch screen, by means of which the user can select the intensity of the beverage to be dispensed, for example between light, normal, or strong, and the quantity thereof, that is, the size of a receptacle 15 to be used, such as a jug, half jug, cup, mug, glass, or suchlike.

The machine 10 comprises a tank 12 for the water, fluidly connected to a filtering container 13 suitable to contain the aromatic mixture 11 to be infused, and to an outlet for the beverage 14 through which the infused beverage can be dispensed into the suitable receptacle 15.

According to some embodiments, the output for the beverage 14 is associated with dispensing means 41, for example a valve 48, which can be selectively activated to open or close the output for beverage 14, and/or to regulate the flow rate through it.

The tank 12 can generally be a container configured to contain a certain quantity of water to prepare a beverage. For example, the volume of the tank 12 can be equal to at least the quantity of water needed to fill a jug.

The tank 12 can be provided with an introduction aperture 12a, associated with a lid 60, through which water can be introduced thereto, and an outlet aperture 17 from which the desired quantity of water can be taken on each occasion.

According to some embodiments, the tank 12 can be positioned inside a housing 20 of the machine 10, or attached thereto, possibly removably, to be subjected to cleaning and/or for filling.

According to a variant, the tank 12 can be associated with a continuous water supply source.

According to some embodiments, the filtering container 13 for the mixture can have a funnel shape, and a filtering element 18 can be inserted therein, suitable to retain the solids of the aromatic mixture 11, preventing them from being dispensed together with the infused drink.

According to some embodiments, the filtering container 13 can be provided with manual or automated closing valves 48, to leave the aromatic mixture 11 infusing for a period of time before dispensing the brewed beverage into the receptacle 15.

According to some embodiments, access means 61 and/or movement means can be provided, configured to allow access to the filtering container 13 in order to introduce on each occasion a desired quantity of aromatic mixture 11 and/or remove it together with the possible filtering element 18 at the end of delivery of the beverage prepared.

According to some embodiments, the machine 10 comprises a diffusion head 19, disposed above the filtering container 13 and configured to dispense the water arriving from the tank 12 above the aromatic mixture 11 so as to increase the contact between the water and the aromatic mixture 11.

According to some embodiments, the diffusion head 19 can be configured to dispense the water in a shower, jets, mist, or also possibly in a continuous flow.

The machine 10 also comprises a heating device 21, disposed between the tank 12 and the filtering container 13, and configured to heat the water in transit to the desired temperature.

According to some embodiments, the heating device 21 is disposed along the hydraulic circuit 22 that connects the tank 12 to the diffusion head 19.

According to some embodiments, the heating device 21 comprises a boiler 24 having at least one conduit 25 defining a transit channel 25a for the water to be heated, and at least one heating element 26 associated with it.

According to some embodiments, the transit channel 25a defines a segment of the circuit 22. According to possible solutions, the internal walls of the transit channel 25a have a suitable shape to extend the useful heat exchange surface.

According to some embodiments, the transit channel 25a is internally lined with a material which does not allow the sedimentation of limescale.

According to other embodiments, the boiler 24 comprises at least one first branch 24a and at least one second branch 24b.

The second branch 24b is disposed downstream of the first branch 24a along the path of the water from the tank 12 to the diffusion head 19.

According to some embodiments, the second branch 24b, or larger branch has a longitudinal extension greater than the first branch 24a, or smaller branch.

According to some embodiments, the two branches 24a, 2b have their respective axis of longitudinal development not aligned along a common straight line.

In other words, a branch, in particular the larger branch 24b, develops substantially in a vertical direction, for the reasons already stated, and for what reported in the following, while the other branch, that is the smaller branch 24a, has at least one substantially horizontal segment, or at least partly curved, having an angle with respect to the larger branch 24b.

According to some embodiments, the larger branch 24b is disposed in a vertical direction, so as to reduce thermal losses to a minimum.

When the water flows in a vertical segment, in fact, it is in direct contact with all the internal walls of the transit channel 25a, so that the heat exchange surface is maximized.

In the horizontal segments, on the contrary, if the pressure and/or the flow of the fed water is not high enough, the quantity of water fed could be insufficient to fill the section of the transit channel 25a, thus reducing the usable heat exchange surface.

The inlet of the boiler 24 in particular is positioned at a lower height than its output.

According to some embodiments, the length of the larger branch 24b is predominant with respect to the overall vertical extension of the circuit 22. In other words, the larger branch 24b extends for the most part of the vertical longitudinal development of the circuit 22.

According to some embodiments, the larger branch 24b extends substantially to the proximity of the diffusion head 19, so as to eliminate or at least reduce as much as possible the thermal losses downstream of the larger branch 24b.

In this way it is ensured that the water delivered into the filtering container 13 is on each occasion at the desired and required temperature.

According to some embodiments, the boiler 24 can be L-shaped, providing that the smaller branch 24a is disposed at least partly along a horizontal direction, while the larger branch 24b develops substantially vertically.

According to possible embodiments, the boiler 24 comprises an accumulation zone 24c, in which possible water residues present in the boiler 24 can be collected at the end of the water supply.

The accumulation zone 24c is preferably disposed upstream of the larger vertical branch 24b along the path of the water.

According to some embodiments, for example in the case where the boiler 24 is L-shaped, the accumulation zone 24c can also comprise at least a part of the first branch 24a.

According to some embodiments, the boiler 24 can comprise two branches 24a, 24b, both disposed along a vertical direction, located on one side and the other of the accumulation zone 24c which defines the intermediate connecting zone.

According to possible variant embodiments, the boiler 24 can be U-shaped or J -shaped.

The U or J shape is particularly advantageous since the water possibly present inside tends to accumulate in the accumulation zone 24c, allowing it to be dried by activating the heating element 26.

According to some embodiments, the heating device 21 comprises two or more heating elements 26, 27 disposed on opposite sides of the conduit 25.

According to other embodiments, the heating elements 26, 27 can be electrical resistances disposed along most of the longitudinal development of the boiler 24, in a linear manner or in a spiral.

According to a variant, the heating elements 26, 27 can be activated so that they reach the target temperature, or to modulate their temperature.

According to some embodiments, the heating elements 26, 27 are autonomous and independent of one another. In particular, the heating elements 26, 27 can be selectively fed according to the temperature to which the water in transit is to be heated and/or depending on the state of progress of the beverage preparation operation.

According to some embodiments, the heating elements 26, 27 have the same power, that is, each one corresponds to 50% of the overall power of the heating device 21.

According to possible variants, the heating elements 26, 27 have different powers from each other, thus allowing a further modulation of the heating temperature.

For example, according to possible implementations, the heating elements 26, 27 can have proportional powers, for example 60%-40%, 70%-30%, 75%-25%, 80%-20%, or intermediate values.

According to some embodiments, the machine 10 also comprises temperature sensor means 28 disposed along the circuit 22 and configured to detect the temperature of the water in transit.

According to some embodiments, the temperature sensor means 28 are disposed downstream of the boiler 24 so as to detect the temperature of the water in transit near the area in which it comes into contact with the aromatic mixture 11.

According to possible variants, the temperature sensor means 28 can be positioned inside the boiler 24, possibly in correspondence with the exit end of the transit channel 25a.

According to other variants, temperature sensor means 28 can be provided both integrated in the boiler 24 or in the heating device 21, and also disposed downstream thereof and possibly upstream as well, so as to be able to regulate the supply of the one or more heating elements 26, 27 also depending on the difference in water temperature detected upstream and downstream of the heating device 21.

According to possible solutions, the temperature sensor means 28 can comprise a Negative Temperature Coefficient (NTC) resistance, located inside a pipe defining a segment of the circuit 22.

According to some embodiments, the machine 10 comprises a pump 30 disposed along the circuit 22 and configured to draw the water from the tank 12 and feed it through the boiler 24 toward the filtering container 13.

According to some embodiments, the pump 30 can be selectively activated to take on each occasion the quantity of water suitable for preparing the quantity of beverage selected by the user.

According to some embodiments, the pump 30 is of the adjustable flow type, so that it is possible to regulate the speed of the water that passes through the boiler 24 and through the aromatic mixture 11.

According to some embodiments, the machine 10 comprises flow detection means disposed in the tank 12 and/or along the circuit 22 to measure the quantity of water in transit through it.

According to some embodiments, the flow detection means comprise a flowmeter 32.

According to some embodiments, the flowmeter 32 is located upstream of the pump 30, allowing a faster and more efficient detection of the flow rate and therefore a dynamic and real-time regulation of the pump 30.

According to some embodiments, the machine 10 comprises a control and command unit 34, configured to regulate the functioning of the heating device 21 and the pump 30 on the basis of selection made by a user, to heat the water to a temperature suitable for preparation of the selected beverage.

According to some embodiments, the control and command unit 34 can comprise, or be connected to, a memory unit 33 in which the optimum temperature and/or water speed values can be memorized for each beverage that can be selected by the user, that is, for each combination defined according to the type of aromatic mixture 11, and/or the intensity of the beverage and/or the selected quantity of the beverage.

The regulation of the temperature makes it possible to prepare, in addition to coffee, tea-based beverages or other vegetable substances, which generally require lower infusion temperatures than those required for coffee.

By way of example, while for a coffee drink a water temperature preferably comprised between about 92°C and about 96°C is required, to prepare tea a water temperature comprised between about 70°C and about 90°C is preferable, depending on the quality of the tea used.

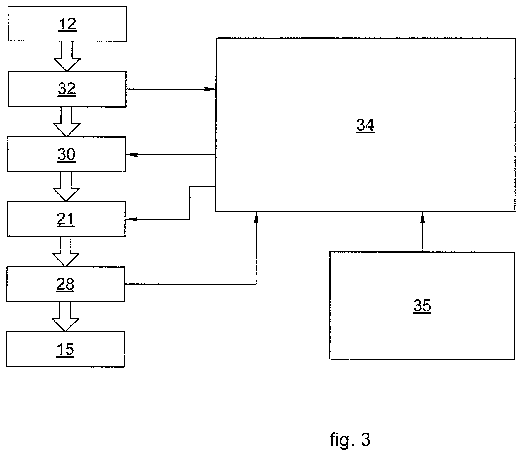

According to some embodiments, described with reference to figs. 1 and 3, the control and command unit 34 is also connected to the temperature sensor means 28 and to the flowmeter 32 to receive the data detected by them.

The control and command unit 34 is also configured to compare the data received with the values memorized in the memory unit 33.

Depending on the selection made by the user on the type and/or quantity of beverage to be prepared, and on the basis of the data received from the temperature sensor means 28 and the flowmeter 32, the control and command unit 34 can regulate the flow rate of the pump 30 and/or the switching on and off of the heating element 26, 27 of the heating device 21 to obtain the beverage selected.

According to some embodiments, the control and command unit 34 receives in real time the data relating to the flow rate and temperature of the water and dynamically regulates, with a feedback control, the pump 30 and the heating device 21.

According to a variant, the control and command unit can regulate the flow rate of the pump 30 and activate the heating device 21 by means of a PID type regulation system, or by other suitable means.

According to these embodiments, for example, the PID regulation system can receive as inputs the flow rate of the water detected by the flowmeter 32 and the temperature of the water detected by the temperature sensor means 38 and supply as outputs the flow rate of the pump 30 and the power supply of the heating element 26, 27 of the heating device 21.

In particular, given the same temperature of the heated water, the control and command unit 34 can decrease or increase the flow rate of the pump 30, and hence the water speed, respectively, to extract more or fewer substances from the aromatic mixture 11, and thus regulate the intensity of the beverage.

For example, it can be provided that the control and command unit 34, to modify the flow rate, acts on the feed power of the pump 30, in such a way as to increase or decrease the number of revs of the motor of the pump.

According to other embodiments, the pump 30 can be selectively activated/ deactivated to deliver the water in pulses, so as to perform a "pour-over" infusion, that is, to obtain a particularly slow extraction of the substances from the aromatic mixture 11.

According to other embodiments, the control and command unit 34 can selectively switch on and off the at least one heating element 26, 27 according to a certain duty-cycle, so as to keep it at the suitable temperature.

According to other embodiments, the control and command unit 34 autonomously and independently switches on and off each heating element 26, 27, so as to suitably modulate the temperature of the heating device 21 according to the operations to be performed.

For example, the temperature of the heating device 21 can be modulated on the basis of slow preheating operations, temperature maintenance, high temperature delivery, or other.

The possibility of dynamically modifying both the flow rate of the pump 30 and also the temperature of the heating device 21, and hence of the water, allows to optimize the extraction of the substances of the aromatic mixture 11 to obtain the desired intensity of the beverage as selected by the user, without needing to provide a pre-infusion step, thus meeting the requirements for high quality.

According to possible variants, however, it can be provided to perform a pre-infusion step of the aromatic mixture 11 before dispensing the brewed beverage.

According to other embodiments, the housing 20 is provided with a support base 37 for the receptacle 15.

According to possible variants, the support base 37 can be provided with additional heating means 38 which can be selectively activated by the control and command unit 34 to keep the beverage dispensed in the receptacle 15 warm.

For example, the additional heating means 38 can comprise a Positive Coefficient Temperature (PCT) resistance.

According to possible embodiments, not shown, other support bases can be provided, possibly folding or mobile, configured to bring the receptacle 15 closer to the outlet of the beverage 14 so as to prevent any splashes of the beverage, if the receptacle 15 used is either a cup, or a glass.

The embodiments described here also concern a method for preparing a beverage which, on the one hand, provides to dispense the selected beverage at its respective optimum temperature, and on the other hand to restore the same conditions of the machine 10 at the end of each beverage preparation operation.

The method for preparing a beverage according to the invention provides to receive, in a control and command unit 34, a command relating to a type and quantity of beverage to be prepared by a user by means of a user interface 35.

Based on the command received and on the parameters memorized, the control and command unit 34 can determine the values of water temperature and speed specific to the selected beverage and can selectively activate the pump 30 and the heating element 21 to obtain the above values.

According to some embodiments, at the start of a beverage preparation operation, the method provides to activate the pump 30 at least to fill the circuit 22 with water, preferably at least up to the temperature sensor means 28.

In this step of activating the pump 30, the heating device 21 can be kept switched off.

Subsequently, the method provides to deactivate the pump 30 so as to stop the water supply to the circuit 22 and to activate the heating device 21 to heat the water inside it to the specified temperature value.

This, in particular, is made possible by the particular configuration of the boiler 24, thanks to which the water remains inside it even when the pump 30 is deactivated, and can therefore be heated rapidly and effectively.

According to some embodiments, the temperature sensor means 28 are advantageously located in a vertical pipe segment, so that the water supplied by the pump 30 remains confined inside the pipe itself even when the pump 30 is deactivated.

According to some embodiments, in order to obtain a rapid heating of the heating device 21, the control and command unit 34 can switch on both the two or more heating elements 26, 27.

Subsequently, when the water downstream of the heating device 21 has reached the specified temperature value, the method provides to activate the pump 30, possibly regulating its flow rate, to infuse the aromatic mixture 11 and dispense the selected beverage in the receptacle 15.

According to some embodiments, during the dispensing step, the control and command unit 34 can selectively switch on and off one or both of the heating elements 26, 27, to keep the specified temperature value.

At the end of the beverage dispensing operation, the method provides to deactivate the pump 30, stopping the water supply in the circuit 22, and to restore the initial conditions of the machine 10.

According to some embodiments, in particular, the method provides to empty and dry the circuit 22, leaving the heating device 21 activated for a period of time suitable to empty the circuit 22 by means of a convective motion, and possibly to empty the water remaining inside it.

The form of the boiler 24 allows in particular to accumulate any residual water in the accumulation zone 24c, allowing it to be removed effectively.

According to some embodiments, during the emptying step, the control and command unit 34 can selectively switch on and off one, or both, the heating elements 26, 27.

According to some embodiments, the emptying step is carried out immediately at the end of the delivery of the beverage. In this way, the water remains inside the circuit 22 for a negligible time, allowing to prevent unwanted contamination of subsequent beverages.

In the case of sequential delivery, it is advantageous to keep the heating device 21 active at the end of each single dispensing operation, since it reduces the energy consumption for the subsequent delivery.

In this case, the heating device 21 remains hot and therefore the water for subsequent delivery reaches the desired temperature in less time.

According to other embodiments, the method can provide, at least in the case where the selected receptacle 15 is a jug, to activate the additional heating means 38 to keep the dispensed beverage hot.

It is clear that modifications and/or additions of parts can be made to the machine 10 and method for preparing a beverage as described heretofore, without departing from the field and scope of the present invention.

It is also clear that, although the present invention has been described with reference to some specific examples, a person of skill in the art shall certainly be able to achieve many other equivalent forms of machine 10 and method for preparing a beverage, having the characteristics as set forth in the claims and hence all coming within the field of protection defined thereby.

## Claims

1. Machine to prepare beverages comprising at least a source (12) of water, fluidly connected, by means of a circuit (22), to a filtering container (13) suitable to contain an aromatic mixture (11) positionable on each occasion and to be subjected to brewing, wherein said machine comprises a pump (30) disposed along the circuit (22) to feed the water from said source (12) to said filtering container (13), a heating device (21) for the water, temperature sensor means (28) suitable to measure the temperature of the water in said circuit (22) downstream of said heating device (21), and a control and command unit (34), functionally connected to a user interface (35) for the selection of a type and a quantity of beverage to be prepared, and configured to receive the data detected by said temperature sensor means (28) and to condition the functioning of said pump (30) and said heating device (21), optimizing the temperature of the heated water, **characterized in that** said heating device (21) comprises a boiler (24) provided with a conduit (25) defining inside it a transit channel (25a) for the water and comprising a first smaller branch (24a) and a second larger branch (24b), wherein said second larger branch (24b) develops along a substantially vertical direction and is disposed downstream of said smaller branch (24a) along the path from said source (12) to said filtering container (13), wherein said smaller branch (24a) has at least one substantially horizontal segment, having an angle with respect to said larger branch (24b).

2. Machine as in claim 1, **characterized in that** said boiler (24) is substantially L-shaped.

3. Machine as in claim 1, **characterized in that** said boiler (24) is substantially J-shaped or U-shaped, wherein said first smaller branch (24a) extends at least partly along a vertical direction substantially parallel to said second larger branch (24b).

4. Machine as in any claim hereinbefore, **characterized in that said boiler (24)** comprises an accumulation zone (24c) for the water, disposed upstream of said second larger branch (24b) along the path of the water.

5. Machine as in any claim hereinbefore, **characterized in that** said boiler (24) comprises at least a heating element (26) associated with said conduit (25) and configured to heat the water inside it.

6. Machine as in any claim hereinbefore, **characterized in that** said heating device (21) comprises two heating elements (26, 27) associated with said boiler (24), wherein said heating elements (26, 27) are selectively able to be activated by said control and command unit (34) autonomously and independently with respect to each other.

7. Machine as in claim 4, **characterized in that** said heating elements (26, 27) have different powers.

8. Machine as in any claim hereinbefore, **characterized in that** it comprises a flowmeter (32) disposed upstream of said pump (30) and connected to said control and command unit (34).

9. Method for preparing a beverage in a machine (10) for preparing beverages comprising a source (12) of water, fluidly connected, by means of a circuit (22), to a filtering container (13) suitable to contain an aromatic mixture (11) positionable on each occasion and to be subjected to brewing, wherein said method provides to:
- receive, in a control and command unit (34), a command concerning the organoleptic characteristics and the quantity of a beverage to be prepared, selected by a user by means of a user interface (35);
- activate a pump (30) to feed the water in said circuit (22) and through a heating device (21), at least as far as temperature sensor means (28);
- determine at least a temperature value to which to heat the water in said circuit (22) as a function of the beverage selected;
- deactivate the pump (30) and activate said heating device (21) to pre-heat the water inside it until the temperature of the heated water detected by said temperature sensor means (28) corresponds to said temperature value determined;
- activate said pump again (30) to feed the heated water into said filtering container (13) to perform the infusion of said aromatic mixture (11) and dispense the quantity of selected beverage into a receptacle (15); **characterized in that** said method provides:
- at the end of the delivery operation of the beverage, to restore the conditions of said machine (10) and remove the residual water from said circuit (22).

10. Method as in claim 9, **characterized in that** said step of restoring the conditions of the machine (10) provides to deactivate said pump (30) and to keep said heating device (21) activated for a period of time suitable to empty and/or dry said circuit (22).

11. Method as in claim 9 or 10, **characterized in that** the activation of said heating device (21) provides to selectively switch on/off two or more heating elements (26, 27) autonomously and independently with respect to each other.

12. Method as in any of the claims from 9 to 11, **characterized in that** the activation of said pump (30) comprises regulating the flow rate of said pump (30) as a function of the type and quantity of beverage selected.

13. Method as in any of the claims from 9 to 12, **characterized in that** the activation of said pump (30) comprises regulating the flow rate of said pump (30) as a function of the temperature detected by said temperature sensor means (28).

14. Method as in any of the claims from 9 to 13, **characterized in that** it provides to activate/deactivate selectively said pump (30) to deliver the water in pulses on said aromatic mixture (11), so as to obtain a particularly slow extraction of the substances from said aromatic mixture (11).

## Patentansprüche

1. Maschine zur Zubereitung von Getränken umfassend mindestens eine Wasserquelle (12), die durch einen Kreislauf (22) in Fluidverbindung mit einem Filterbehälter (13) steht, der geeignet ist, eine aromatische Mischung (11) aufzunehmen, die bei jedem Gebrauch positioniert und aufgebrüht werden kann, wobei die Maschine umfasst: eine Pumpe (30), die entlang des Kreislaufs (22) positioniert ist, um das Wasser von der Wasserquelle (12) dem Filterbehälter (13) zuzuführen, eine Heizvorrichtung (21) für das Wasser, Temperatursensormittel (28), die geeignet sind, die Temperatur des Wassers in dem Kreislauf (22) stromabwärts der Heizvorrichtung (21) zu messen, und eine Steuer- und Befehlseinheit (34), die funktionell mit einer Benutzeroberfläche (35) zur Auswahl einer Art und einer Menge des herzustellenden Getränks verbunden und so konfiguriert ist, dass sie die durch die Temperatursensormittel (28) detektierten Daten empfängt und die Funktionsweise der Pumpe (30) und der Heizvorrichtung (21) bestimmt und dadurch die Temperatur des erhitzten Wassers optimiert, **dadurch gekennzeichnet, dass** die Heizvorrichtung (21) einen Erhitzer (24) umfasst, der mit einer Leitung (25) versehen ist, in deren Inneren ein Durchgangskanal (25a) für das Wasser definiert ist, und der einen ersten kleineren Zweig (24a) und einen zweiten größeren Zweig (24b) umfasst, wobei der zweite größere Zweig (24b) entlang einer im Wesentlichen vertikalen Richtung verläuft und entlang des Wegs von der Quelle (12) zu dem Filterbehälter (13) stromabwärts des kleineren Zweigs (24a) angeordnet ist, wobei der kleinere Zweig (24a) mindestens einen im Wesentlichen horizontalen Abschnitt aufweist, der einen Winkel in Bezug auf den größeren Zweig (24b) aufweist.

2. Maschine gemäß Anspruch 1, **dadurch gekennzeichnet, dass** der Erhitzer (24) im Wesentlichen L-förmig ausgebildet ist.

3. Maschine gemäß Anspruch 1, **dadurch gekennzeichnet, dass** der Erhitzer (24) im Wesentlichen J-förmig oder U-förmig ausgebildet ist, wobei der erste kleinere Zweig (24a) sich zumindest teilweise entlang einer vertikalen Richtung im Wesentlichen parallel zu dem zweiten größeren Zweig (24b) erstreckt.

4. Maschine gemäß irgendeinem vorhergehenden Anspruch, **dadurch gekennzeichnet, dass** der Erhitzer (24) eine Akkumulationszone (24c) für das Wasser umfasst, die entlang des Wasserwegs stromaufwärts des zweiten größeren Zweigs (24b) angeordnet ist.

5. Maschine gemäß irgendeinem vorhergehenden Anspruch, **dadurch gekennzeichnet, dass** der Erhitzer (24) mindestens ein Heizelement (26) umfasst, das mit der Leitung (25) verbunden und so konfiguriert ist, dass es das Wasser in ihrem Inneren erhitzt.

6. Maschine gemäß irgendeinem vorhergehenden Anspruch, **dadurch gekennzeichnet, dass** die Heizvorrichtung (21) zwei Heizelemente (26, 27) umfasst, die mit der Erhitzer (24) verbunden sind, wobei die Heizelemente (26, 27) durch die Steuer- und Befehlseinheit (34) autonom und unabhängig voneinander selektiv aktiviert werden können.

7. Maschine gemäß Anspruch 4, **dadurch gekennzeichnet, dass** die Heizelemente (26, 27) unterschiedliche Leistungen haben.

8. Maschine gemäß irgendeinem vorhergehenden Anspruch, **dadurch gekennzeichnet, dass** sie einen Durchflussmesser (32) umfasst, der stromaufwärts der Pumpe (30) angeordnet und mit der Steuer- und Befehlseinheit (34) verbunden ist.

9. Verfahren zur Zubereitung eines Getränks in einer Maschine (10) zur Zubereitung von Getränken umfassend mindestens eine Wasserquelle (12), die durch einen Kreislauf (22) in Fluidverbindung mit einem Filterbehälter (13) steht, der geeignet ist, eine aromatische Mischung (11) aufzunehmen, die bei jedem Gebrauch positioniert und aufgebrüht werden kann, wobei das Verfahren bereitstellt:
- Empfangen, in einer Steuer- und Befehlseinheit (34), eines Befehls betreffend die organoleptischen Eigenschaften und die Menge eines herzustellenden Getränks, ausgewählt durch einen Benutzer mittels einer Benutzeroberfläche (35);
- Aktivieren einer Pumpe (30) zur Zuführung des Wassers in den Kreislauf (22) und durch eine Heizvorrichtung (21) zumindest bis zu den Temperatursensormitteln (28);
- Bestimmen zumindest eines Temperaturwerts, auf den das Wasser in dem Kreislauf (22) erhitzt werden soll, in Abhängigkeit von dem ausgewählten Getränk;
- Deaktivieren der Pumpe (30) und Aktivieren der Heizvorrichtung (21) zum Vorerhitzen des Wassers in ihrem Inneren, bis die durch die Temperatursensormittel (28) detektierte Temperatur des erhitzten Wassers dem bestimmten Temperaturwert entspricht;
- erneutes Aktivieren der Pumpe (30), um das erhitzte Wasser dem Filterbehälter (13) zuzuführen, um den Aufguss der aromatischen Mischung (11) durchzuführen und die Menge des ausgewählten Getränks in ein Behältnis (15) abzugeben,
**dadurch gekennzeichnet, dass** das Verfahren bereitstellt:
- Wiederherstellen des Zustands der Maschine (10) und Entfernen des restlichen Wassers aus dem Kreislauf (22) am Ende des Abgabevorgangs des Getränks.

10. Verfahren gemäß Anspruch 9, **dadurch gekennzeichnet, dass** der Schritt des Wiederherstellens des Zustands der Maschine (10) das Deaktivieren der Pumpe (30) und das Halten der Heizvorrichtung (21) in einem aktivierten Zustand für einen Zeitraum, der geeignet ist, um den Kreislauf (22) zu entleeren und/oder zu trocknen, bereitstellt.

11. Verfahren gemäß Anspruch 9 oder 10, **dadurch gekennzeichnet, dass** die Aktivierung der Heizvorrichtung (21) das selektive Ein-/Ausschalten von zwei oder mehr Heizelementen (26, 27), autonom und unabhängig voneinander, bereitstellt.

12. Verfahren gemäß irgendeinem der Ansprüche 9 bis 11, **dadurch gekennzeichnet, dass** die Aktivierung der Pumpe (30) das Regulieren der Durchflussmenge der Pumpe (30) in Abhängigkeit von der Art und der Menge des ausgewählten Getränks umfasst.

13. Verfahren gemäß irgendeinem der Ansprüche 9 bis 12, **dadurch gekennzeichnet, dass** die Aktivierung der Pumpe (30) das Regulieren der Durchflussmenge der Pumpe (30) in Abhängigkeit von der durch das Temperatursensormittel (28) detektierten Temperatur umfasst.

14. Verfahren gemäß irgendeinem der Ansprüche 9 bis 13, **dadurch gekennzeichnet, dass** es das selektive Aktivieren/Deaktivieren der Pumpe (30) zur Abgabe des Wassers in Impulsen an die aromatische Mischung (11) bereitstellt, so dass eine besonders langsame Extraktion der Substanzen aus der aromatischen Mischung (11) erhalten wird.

## Revendications

1. Machine pour préparer des boissons comprenant au moins une source (12) d'eau, reliée fluidiquement, au moyen d'un circuit (22), à un récipient de filtrage (13) approprié pour contenir un mélange aromatique (11) pouvant être positionné à chaque fois et pour être soumis à une infusion, où ladite machine comprend une pompe (30) disposée le long du circuit (22) pour alimenter l'eau de ladite source (12) audit récipient de filtrage (13), un dispositif de chauffage (21) pour l'eau, des moyens de capteur de température (28) appropriés pour mesurer la température de l'eau dans ledit circuit (22) en aval dudit dispositif de chauffage (21), et une unité de contrôle et de commande (34), fonctionnellement connectée à une interface utilisateur (35) pour la sélection d'un type et d'une quantité de boisson à préparer, et configurée pour recevoir les données détectées par lesdits moyens de capteur de température (28) et pour conditionner le fonctionnement de ladite pompe (30) et dudit dispositif de chauffage (21), en optimisant la température de l'eau chauffée, **caractérisée en ce que** ledit dispositif de chauffage (21) comprend une chaudière (24) munie d'un conduit (25) définissant à l'intérieur de celle-ci un canal de transit (25a) pour l'eau et comprenant une première branche plus petite (24a) et une seconde branche plus grande (24b), où ladite seconde branche plus grande (24b) se développe le long d'une direction sensiblement verticale et est disposée en aval de ladite branche plus petite (24a) le long du trajet allant de ladite source (12) audit récipient de filtrage (13), où ladite branche plus petite (24a) a au moins un segment sensiblement horizontal, ayant un angle par rapport à ladite branche plus grande (24b).

2. Machine selon la revendication 1, **caractérisée en ce que** ladite chaudière (24) est sensiblement en forme de L.

3. Machine selon la revendication 1, **caractérisée en ce que** ladite chaudière (24) est sensiblement en forme de J ou en forme de U, où ladite première branche plus petite (24a) s'étend au moins partiellement le long d'une direction verticale sensiblement parallèle à ladite seconde branche plus grande (24b).

4. Machine selon l'une quelconque des revendications précédentes, **caractérisée en ce que** ladite chaudière (24) comprend une zone d'accumulation (24c) pour l'eau, disposée en amont de ladite seconde branche plus grande (24b) le long du trajet de l'eau.

5. Machine selon l'une quelconque des revendications précédentes, **caractérisée en ce que** ladite chaudière (24) comprend au moins un élément chauffant (26) associé audit conduit (25) et configuré pour chauffer l'eau à l'intérieur de celui-ci.

6. Machine selon l'une quelconque des revendications précédentes, **caractérisée en ce que** ledit dispositif de chauffage (21) comprend deux éléments chauffants (26, 27) associés à ladite chaudière (24), où lesdits éléments chauffants (26, 27) peuvent être activés de manière sélective par ladite unité de contrôle et de commande (34) de manière autonome et indépendante l'un par rapport à l'autre.

7. Machine selon la revendication 4, **caractérisée en ce que** lesdits éléments chauffants (26, 27) ont des puissances différentes.

8. Machine selon l'une quelconque des revendications précédentes, **caractérisée en ce qu'**elle comprend un débitmètre (32) disposé en amont de ladite pompe (30) et relié à ladite unité de contrôle et de commande (34).

9. Procédé de préparation d'une boisson dans une machine (10) de préparation de boissons comprenant une source (12) d'eau, reliée fluidiquement, au moyen d'un circuit (22), avec un récipient de filtrage (13) approprié pour contenir un mélange aromatique (11) pouvant être positionné à chaque fois et pour être soumis à une infusion, où ledit procédé consiste à :
- recevoir, dans une unité de contrôle et de commande (34), une commande concernant les caractéristiques organoleptiques et la quantité d'une boisson à préparer, sélectionnée par un utilisateur au moyen d'une interface utilisateur (35) ;
- activer une pompe (30) pour alimenter l'eau dans ledit circuit (22) et à travers un dispositif de chauffage (21), au moins jusqu'à des moyens de capteur de température (28) ;
- déterminer au moins une valeur de température à laquelle chauffer l'eau dans ledit circuit (22) en fonction de la boisson sélectionnée ;
- désactiver la pompe (30) et activer ledit dispositif de chauffage (21) pour préchauffer l'eau à l'intérieur jusqu'à ce que la température de l'eau chauffée détectée par lesdits moyens de capteur de température (28) corresponde à ladite valeur de température déterminée ;
- activer à nouveau ladite pompe (30) pour alimenter l'eau chauffée dans ledit récipient de filtrage (13) pour effectuer l'infusion dudit mélange aromatique (11) et distribuer la quantité de boisson sélectionnée dans un réceptacle (15) ; **caractérisé en ce que** ledit procédé fournit :
- à la fin de l'opération de distribution de la boisson, le rétablissement des conditions de ladite machine (10) et l'élimination de l'eau résiduelle dudit circuit (22).

10. Procédé selon la revendication 9, **caractérisé en ce que** ladite étape de rétablissement des conditions de la machine (10) permet de désactiver ladite pompe (30) et de maintenir ledit dispositif de chauffage (21) activé pendant une période de temps appropriée pour vider et/ou sécher ledit circuit (22).

11. Procédé selon la revendication 9 ou 10, **caractérisé en ce que** l'activation dudit dispositif de chauffage (21) permet d'allumer/éteindre sélectivement deux ou plusieurs éléments chauffants (26, 27) de manière autonome et indépendante l'un par rapport à l'autre.

12. Procédé selon l'une quelconque des revendications 9 à 11, **caractérisé en ce que** l'activation de ladite pompe (30) comprend la régulation du débit de ladite pompe (30) en fonction du type et de la quantité de boisson sélectionnée.

13. Procédé selon l'une quelconque des revendications 9 à 12, **caractérisé en ce que** l'activation de ladite pompe (30) comprend la régulation du débit de ladite pompe (30) en fonction de la température détectée par lesdits moyens de capteur de température (28).

14. Procédé selon l'une quelconque des revendications 9 à 13, **caractérisé en ce qu'**il prévoit d'activer/désactiver sélectivement ladite pompe (30) pour délivrer l'eau par impulsions sur ledit mélange aromatique (11), de manière à obtenir une extraction particulièrement lente des substances dudit mélange aromatique (11).
